# EUROPEAN PATENT APPLICATION

(11) **EP 2 283 988 A1**
(43) Date of publication of application: **16.02.2011**
(21) Application number: 09167886.2
(22) Date of filing: 14.08.2009
(51) Int. Cl.: B29C 45/14, B01D 63/08

(54) **Planar membrane module preparation**

(71) Applicant: Nederlandse Organisatie voor Toegepast -Natuurwetenschappelijk Onderzoek TNO, 2628 VK Delft (NL)
(72) Inventor: van Medevoort, Jolanda, 6715 JR Ede (NL)
(74) Representative: Hatzmann, Martin

(57) **Abstract**

The invention is directed to a method for preparing a planar membrane module and a planar membrane module obtainable by said membrane.

The method of the invention comprises:
- providing a solid state planar membrane;
- optionally placing a spacer at least at one side of the planar membrane and attaching said spacer onto said planar membrane at the periphery of said planar membrane by hot pressing, thereby forming a sub-assembly of spacer and planar membrane;
- injection moulding a potting around said planar membrane or around said sub-assembly of spacer and planar membrane, thereby forming a membrane frame; and
- joining a stack of said membrane frames to form a planar membrane module, said joining comprising melting of potting material.

## Description

The invention describes a method for preparing a planar membrane module and a planar membrane module obtainable by said membrane.

Many industries apply processes that use membranes to separate (components from) fluids and/or gases. Representatives of such processes are for example microfiltration, ultrafiltration, reverse osmosis, electro dialysis, diffusion dialysis, gas separation, (emulsion) pertraction, membrane distillation and pervaporation). Other separation processes in which membranes can be applied include chemical (catalytic) reactions/conversions in membrane contactors and the production of energy from differences in salinity of water flows by reversed electro dialysis or pressure retarded osmosis.

The membrane in such membrane separation processes may vary in structure (porous/non-porous) and may vary in material (organic/inorganic). The membrane is using differences in physical and/or chemical properties between the membrane and permeating/transported components to accomplish a particular separation and transport on component level. Transport through the membrane takes place when a driving force is applied to the compounds/components in the feed. The driving force is for example a (vapour) pressure difference, electrical potential or a concentration (or activity) difference across the membrane. In many cases, also selectivity is important.

A membrane contactor is a device where separation of compounds is accomplished due to a specific driving force through the membrane from the one phase to the other on opposite sides of the membrane. This membrane module achieves gas/liquid or liquid/liquid mass transfer without dispersion of one phase within another. The membrane represents an interface and can be defined as a perm selective barrier between two or more (non) homogeneous phases. Some of the important advantages of membrane contactors in contrast to conventional dispersed phase contactors are: no flooding at high flow rates, no unloading at low flow rates, absence of emulsions, and no density difference between fluids required. They reduce the volume of equipment and offer more interfacial area in non-dispersive contact across a membrane. The membrane should be attentively chosen to enable as much as possible higher values of the mass transfer coefficient.

Membranes used to accomplish these separations have been fabricated in various geometries, such as planar sheet, spiral wound sheet, tubular and hollow fibres. The membrane geometry is usually dictated by the nature of the separation that is to be effected and the limitations of membrane production facilities. In order to maximise the membrane area per unit volume, a multitude of membranes are usually included in a membrane module. A number of planar membrane frames can for instance be stacked using assembling means such as screws, bolts, seals, and/or adhesives. Such assembling means typically have low chemical resistance.

The inventors were faced with the problem that under special conditions, such as high temperatures and/or contact with reactive chemicals, the conventional planar membrane modules do not perform satisfactory. On the other hand, hollow fibre membrane modules are available that exhibit better temperature resistance and chemical inertia. However, these hollow fibre membrane modules are much more expensive, have limited applications, and suffer from difficult flow characteristics around the hollow fibres. Moreover, planar membranes are much more abundant, and are therefore more easily applicable.

Object of the invention is therefore to provide a method for producing a planar membrane module, having broad applicability and being relatively cheap, which membrane module combines good chemical resistance with high temperature resistance.

The inventors found that this object can be met by providing a method for preparing a planar membrane module wherein the potting is injection moulded and different membrane frames are combined by fusion.

Accordingly, in a first aspect the invention is directed to a method for preparing a planar membrane module, comprising
- providing a solid state planar membrane;
- optionally placing a spacer at least at one side of the planar membrane and attaching said spacer onto said planar membrane at the periphery of said planar membrane by hot pressing, thereby forming a sub-assembly of spacer and planar membrane;
- injection moulding a potting around said planar membrane or around said sub-assembly of spacer and planar membrane, thereby forming a membrane frame; and
- joining a stack of said membrane frames in a gastight manner to form a planar membrane module, said joining comprising fusion of adjacent membrane frames by welding of potting material.

The process of the invention advantageously yields a membrane module that, by selection of feasible thermoplastic materials for the different components, is chemically stable and is suitable for use up to relatively high operating temperatures (such as temperatures of up to 90 °C, or even up to 150 °C). At the same time, the invention allows designing membrane modules that can be used at higher pressure differences during operation. In addition, the approach of the invention using planar membranes allows a wide materials choice, and thereby a broad field of applications. Furthermore, by using simple processing steps, the production costs remain low and the production speed can be high. Another advantage is that the present invention allows the production of different sizes of modules depending on the application, for example small size membrane modules (such as 0.2-10 m² per module, preferably 0.5-5 m²), medium size membrane modules (such as 10-200 m², preferably 50-100 m² per module), and large size membrane modules (> 200 m² per module, such as 500-1000 m² per module).

Furthermore, the invention advantageously allows the production of membrane modules that consist of only plastic materials. Hence, corrosion of corrosion sensitive materials caused by contact with liquids and/or gasses can advantageously be avoided. Therefore, the invention allows the production of highly corrosion resistant membrane modules that find application e.g. in the field of separation of salt water streams and/or brines, and in other applications where corrosion plays an important role.

The type of solid state planar membrane used in accordance with the method of the invention is not limiting and strongly depends on the application for which the planar membrane module is to be used. The membrane can e.g. be microporous, homogeneous, asymmetric, electrically charged, and optionally surface treated. It is also possible that an additional layer is applied to the membrane, e.g. for mechanical support.

Examples of materials used in planar membranes include fluor polymers (such as polytetrafluoroethylene), polypropylene, polyphenylene oxide, polysulphone, sulphonated poly ether ether ketone, poly ether sulphone, ion selective membranes (i.e. cation or anion permeable membranes), and so-called bipolar membranes. The membrane used in accordance with the method of the invention can suitably comprise one or more of these materials. Advantageously, these materials can have relatively high chemical and/or thermal resistance. For applications wherein aggressive chemicals are used at elevated temperature, it is advantageous that the planar membrane comprises polytetrafluoroethylene. This material has excellent chemical resistance and a favourable high melting point and accordingly allows high operating temperatures of the planar membrane module (such as up to 120 °C, or even up to 150 °C).

Depending on the application, the planar membrane can be subjected to a suitable pre-treatment. Such pre-treatments can for example include impregnation of the membrane pores, coating of the membrane surface, and/or etching of the membrane surface. For example, a hydrophilic membrane surface can be rendered hydrophobic by impregnating the membrane pores with a hydrophobic agent.

The planar membrane to be used in accordance with the invention can be porous or non-porous. Porous membranes can have widely varying pore sizes. The average pore size of the planar membrane is usually smaller than 300 µm, such as 0.02-0.05 µm (in particular for liquid/liquid (component) separation or pertraction), 0.05-0.2 µm (in particular for membrane distillation), or 100-200 µm. It is even possible to use a planar membrane that has an average pore size of less than 0.01 µm, e.g. membranes that are porous for ions such as used in electrochemistry. Average pore sizes can be measured according to the bubble point method specified in ASTM F-316-80 (Fischer et al. "Eine Methode zur Ermittlung der Porengrössenverteilung" in Messtechnik 1968, 76(12)).

Furthermore, various membrane thicknesses can be applied. Normally the membrane will not have a thickness exceeding 500 µm, preferably the membrane thickness will be 100 µm or less. If the membrane is too thick, then mass transfer through the membrane will be slow and the overall process time of separation will increase. The membrane thickness will usually have a thickness of at least 10 µm in order to possess sufficient mechanical strength.

It is not required that the planar membranes in the membrane module each have the same thickness and are all composed of the same material. It is possible to combine two or more different membranes in one membrane module. For example in electro dialysis, the membrane module can comprise cation and anion membranes, or the membrane module can comprise cation, anion and bipolar membranes.

Apart from planar membranes, optional spacers and potting, further components may be included in the membrane module. It is for instance possible to include one or more foils in the membrane module. For example in membrane distillation a polymer foil is introduced to transfer condensation heat from the distillate to the cold feed water. Hot feed water is then separated from the distillate by the membrane, through which the water vapour is transported.

Optionally, the membrane may be mechanically supported by a supporting layer or carrier.

In accordance with the invention, at least one spacer is optionally provided between each two membranes. These spacers can be used for consolidation, cell thickness and/or flow control. The spacer which is optionally placed at least at one side of the membrane can be chosen depending on the specific application. The spacer ensures that there is no contact between different planar membranes in the membrane module and that facilitates transportations of fluids to and from the membranes in the membrane module. A wide range of spacers for membrane modules are known in the art. A plastic spacer can be produced by extrusion and injection moulding. The more common plastic materials are polyethylene, polypropylene, polyester, polyvinylidene fluoride, ethylene chlorotrifluoroethylene copolymer and polyamide. However, almost all plastic materials can be applied and some of the elastomer types.

The spacer can have various shapes. Usually, the spacer is in the form of a grid or grating. However, other forms of spacer can be used as well, such as so-called non-wovens. The number and type of spacers used between each membrane can vary. A single spacer can be used, but also a multitude of (similar or different) spacers can be applied between each membrane such as two, three or four spacers. It is not required that the spacers in the membrane module each have the same thickness and shape, and are composed of the same material. It is possible to not use a spacer in at least one of the compartments in the membrane module.

For instance, it is possible to injection mould the spacer together with the potting so that the potting and the spacer are produced as one part.

The thickness of each spacer can independently be 0.1 mm or more. Depending on the application, the thickness of each spacer can independently be 20 mm or less. Normally, each spacer will independently have a thickness in the range of 0.1-10 mm, such as in the range of 0.1-1 mm, 1-5 mm or 5-10 mm.

After having placed one or more spacers on one or both sides of the planar membrane, or a spacer between two membranes, the spacer(s) and the membrane(s) are hot-pressed at the periphery of the planar membrane. The term "hot-pressing" as used in this application is meant to refer to any operation involving pressure and heating which provides sufficient forces to attach the spacer onto the membrane. During the hot-pressing step the spacer material is pressed onto the membrane, and preferably forms a periphery that substantially does not have openings through which moulding material can flow during the injection moulding step. During hot-pressing, the planar membrane is usually fixed to the spacer material, thereby forming a sub-assembly of spacer and planar membrane, which can be further processed. A pre-treatment of the membrane (such as etching, dipping, or irradiation) can be applied to achieve a better bonding of the membrane to the spacer.

Hot-pressing the spacer membrane combination normally involves temperatures in the range of 100-200 °C when spacer materials such as polyethylene and/or polypropylene are involved, and pressures of 2-40 bar, preferably of 5-20 bar. When materials such as polyamide, polyvinylidene fluoride, ethylene chlorotrifluoroethylene copolymer and/or poly ether ether ketone are involved, usually temperatures in the range of 200-400 °C, and pressures in the range of 2-40 bar are applied. Temperatures close to the melting temperature of the membrane may lead to damaging and/or perforation of the membrane and are therefore not preferred. The exact temperature and pressure to be used depends on the membrane and spacer material.

In a step thereafter, a potting is injection moulded around the planar membrane or around the sub-assembly of spacer and planar membrane, thereby forming a membrane frame. The potting can comprise a variety of different materials. However, good results have been achieved with e.g. polypropylene, polyethylene, and/or polyfluoropolymers that are compatible with injection moulding (such as perfluoralkoxy copolymer, ethylene-tetrafluoroethylene copolymer, and fluorinated ethylene propylene copolymer, polyvinylidene fluoride and modified polytetrafluorethylene.

Injection moulding is a relatively cheap technique which allows the easy production of membrane frames and is a relatively cheap technique for large series. By hot-pressing the optional spacer onto the membrane, a sub-assembly is formed prior to injection moulding in which the periphery substantially does not have openings. Advantageously, this allows to injection mould the potting without having moulding material run into the spacer/membrane sub-assembly. For example, an injection mould equipped with a pinch edge can then be applied to cut off any flow openings. It is further possible to injection mould a spacer together with the potting. In this manner a spacer can for instance be injection moulded directly against the planar membrane, thereby making the step of hot-pressing a spacer onto the planar membrane superfluous. This process is similar bonding by extrusion welding.

The planar membrane module of the invention can then be prepared by stacking a multitude of said membrane frames on top of each other. Each frame can have identical external dimensions. However, a membrane module according to the invention can also comprise two or more different frames with respect to e.g. dimensions or chemical properties. By providing the frames with holes and aligning these holes with one another, passages can be formed for the common supply of e.g. the feed, discharge, permeate, product and/or retentate. In a preferred embodiment, the membrane frames are stacked in alternating mirror wise fashion, such that the fluid at each side of a membrane will flow in reverse directions.

After two or more membrane frames have been placed on top of one another, the stack is joined by welding (which involves melting of) potting material. The joint between the different membrane frames should be gastight. Joining can for instance be performed by wire welding, according to which a metallic wire is provided between the frames. Upon heating the wire, the potting material of the different membrane frames melts and are interconnected by welding. After cooling the potting material solidifies, thereby joining the different membrane frames. It is also possible to join two frames at a time by hot pressure welding. Such pressure welding can be performed at very specific locations of the membrane frames, thereby allowing a precise joint. Combinations of different joining technique involving melting of the potting material can be used as well.

In accordance with the invention, it is preferred that the material of the optional spacer and the potting have melting points that are similar. It is preferred that the melting point of the membrane material equals or exceeds the melting point of the optional spacer material and the potting material. In this manner, the invention advantageously allows preparing e.g. a membrane module having polytetrafluorethylene membranes and a polypropylene potting, a polypropylene membrane with a polypropylene potting, or a polytetrafluorethylene membrane with a perfluoralkoxy copolymer potting. The melting temperature of the optional spacer material and the potting material should be close to one another. Variations are preferably kept within a range of 20 °C.

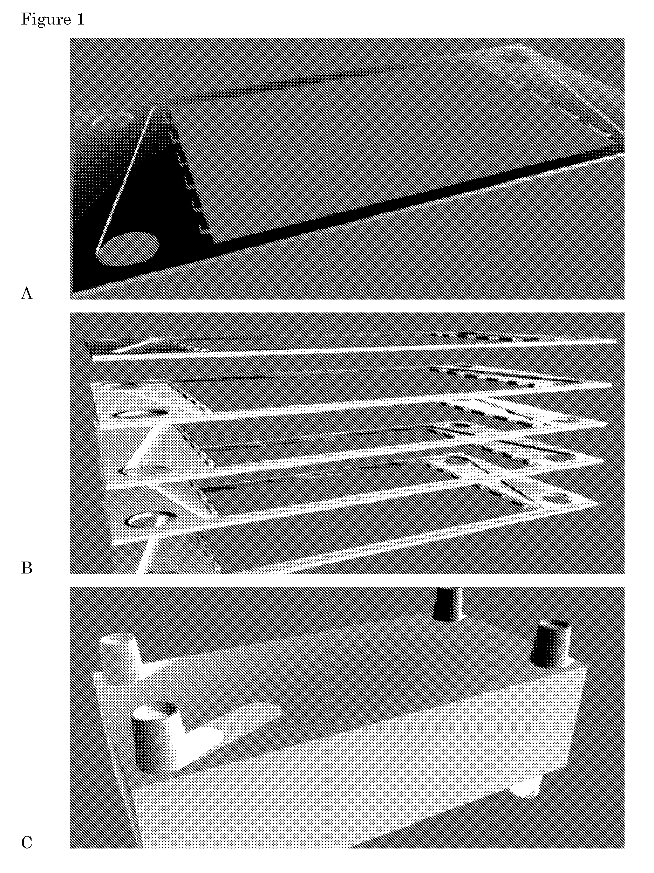

The method of the invention is further illustrated by means of the schematic pictures in Figure 1. A possible form of a membrane frame is depicted in Figure 1A (shown without membrane and spacer). Holes in the membrane frame allow supply of feed, discharge, permeate and/or retentate. Joining a stack of membrane frames in alternating mirror wise fashion yields an advantageous counter-current design as shown in Figure 1B (shown without membrane and spacer). The provision of holes in the membrane frames for supply of feed, discharge, permeate and/or retentate allows for simple coupling of the membrane system to further equipment, Figure 1C.

Advantageously, the resulting planar membrane module does not require any O-rings, screws, bolts, adhesives, or other additional elements to combine the different membrane frames into a membrane module. This is highly advantageous, because such additional elements are usually weak points or potential causes for premature leakage of the final membrane module.

In a further aspect therefore, the invention is directed to a planar membrane module obtainable by the process according to the invention. In a preferred embodiment, the membrane module of the invention is free from O-rings, screws, bolts, and adhesives. The planar membrane module obtainable by the process of the invention can be cased in an external frame using conventional techniques. This external frame improves the mechanical properties of the membrane module and can for instance assist in absorbing pressures during operation.

In an embodiment, the membrane module of the invention consists of plastic materials, i.e. all parts and materials in contact with process fluids (liquids and/or gases) inside the module do not contain corrosion sensitive materials, such as metals. Such a membrane module is highly corrosion resistant.

The membrane module of the invention can be applied in a wide variety of applications. The membrane module can be used for separation processes of both liquid/liquid systems, as well as liquid/gas systems. Some examples of applications include the extraction of an organic phase/component from waste water, gas adsorption, and membrane distillation. Applications can widely range in scale from large scale (in the order of 100 000 - 500 000 m² membrane surface or larger) to middle scale (in the order of 100 - 10 000 m² membrane surface) and also small scale installations in the order of 0.1 - 10 m² of membrane area, for e.g. where applications are decentralised.

The membrane module (depending on the materials used) can be used at operating temperatures of up to 80 °C, 120 °C, or even up to 150 °C. Normally, the membrane module will not be operated at temperatures below 5 °C. In addition, due to the high quality welding joints between the different membrane frames in the membrane module it is possible to deal with considerable pressure differences. This is of importance, because during operation, the pressure differences at specific locations of the membrane module can reach a value of for instance about 1-2 bar. Normally this pressure difference will not exceed 3 bar.

The invention will now be illustrated by means of the following Example.

### Example

A spacer/membrane sub-assembly was made by pressing a polypropylene spacer and a PTFE (polytetrafluorethylene) membrane together on the edges of the membrane surface to be used, at a temperature of 110 °C and 10 bar.

The pressed spacer/membrane sub-assembly was placed in an injection mould. A polypropylene frame was injection moulded around the pressed spacer/membrane sub-assembly at typical polypropylene injection mould settings (150 °C and 200 bar), to create a membrane frame.

A conductive wire, a metal wire of 0.5 mm diameter, was placed around the fluid pockets of the first membrane frame. A second membrane frame was placed on top of the first membrane frame such that a cross-flow was created on two sides of each membrane.

The conductive wire was heated by an electric current in the range of 60 V and 10 A, for a period long enough to locally melt the polypropylene frame of the membrane frame. When the polypropylene was melted the electric current was stopped and the two membrane fames were pressed together until the polypropylene cooled down below 100 °C.

Larger membrane areas can be created by putting more membrane frames on top of one another in a way as described above.

In order to finish the membrane unit an end plate with an inlet and an outlet for a first fluid was placed on one side and an end plate with an inlet and an outlet for a second fluid was placed on the other end. They were both welded with a conductive wire as mentioned above.

## Claims

1. Method for preparing a planar membrane module, comprising
- providing a solid state planar membrane;
- optionally placing a spacer at least at one side of the planar membrane and attaching said spacer onto said planar membrane at the periphery of said planar membrane by hot pressing, thereby forming a sub-assembly of spacer and planar membrane;
- injection moulding a potting around said planar membrane or around said sub-assembly of spacer and planar membrane, thereby forming a membrane frame; and
- joining a stack of said membrane frames in a gastight manner to form a planar membrane module, said joining comprising welding of potting material.

2. Method according to claim 1, wherein said planar membrane is subjected to a pre-treatment, comprising impregnation, coating and/or etching.

3. Method according to claim 1 or 2, wherein the melting point of the membrane material equals or exceeds the melting point of the potting material and the optional spacer material.

4. Method according to any one of claims 1-3, wherein said potting comprises injection moulding compatible plastics, such as polyolefin and/or injection moulding compatible fluor polymers.

5. Method according to any one of claims 1-4, wherein said hot pressing comprises applying a temperature of 100-400 °C and a pressure of 2-40 bar.

6. Method according to any one of claims 1-5, wherein said attaching is such that thereafter the periphery of the sub-assembly of spacer and planar membrane substantially does not have openings through which moulding material can flow during the injection moulding step.

7. Method according to any one of claims 1-6, wherein said injection moulding is performed in an injection mould equipped with a pinch edge, which pinch edge presses on the periphery of the sub-assembly of spacer and planar membrane during moulding.

8. Method according to any one of claims 1-7, wherein said welding comprises wire welding and/or pressure welding.

9. Method according to any one of claims 1-8, wherein said membrane is porous and has an average pore size in the range of 0.01-300 µm, such as in the range of 0.02-0.05 µm, in the range of 0.1-0.2 µm, or in the range of 100-200 µm.

10. Method according to any one of claims 1-9, wherein said membrane is non-porous.

11. Method according to any one of claims 1-10, wherein the melting point of the potting material and the melting point of the optional spacer material do not differ more than 20 °C .

12. Planar membrane module obtainable by a process according to any one of claims 1-11.

13. Planar membrane module according to claim 12, wherein said membrane module is free from O-rings, screws, bolts, and adhesives.

14. Planar membrane module according to claims 12 or 13, consisting of plastic materials.
